# EUROPEAN PATENT APPLICATION

(11) **EP 4 656 951 A1**
(43) Date of publication of application: **03.12.2025**
(21) Application number: 24216042.2
(22) Date of filing: 28.11.2024
(51) Int. Cl.: F24C 15/20, G01N 15/00

(54) **OIL FUME SENSOR AND RANGE HOOD**

(30) Priority: 31.05.2024 CN 202410703441
(71) Applicant: Foshan Shunde Midea Washing Appliances Manufacturing Co., Ltd., Foshan, Guangdong 528311 (CN)
(72) Inventor: XU, Huarui, Foshan (CN)
(74) Representative: Ran, Handong

(57) **Abstract**

Provided are an oil fume sensor and a range hood. The oil fume sensor of embodiments of the present invention includes a body and a least two oil fume guide tubes. The body includes a housing and a detection circuit disposed in the housing. The housing defines an oil fume inlet tube. The at least two oil fume guide tubes are connected to the body. The oil fume inlet tube is in communication with an ambient environment through the at least two oil fume guide tubes. In the oil fume sensor provided by the embodiment of the present invention, at least two oil fume inlet passages are formed through disposing the at least two oil fume guide tubes, thereby increasing an oil fume intake volume. Therefore, after the oil fume sensor is applied in the range hood, oil fumes can be more easily captured by the oil fume sensor, in such a manner that the range hood can intelligently adjust power of the range hood based on an oil fume concentration.

## Description

### FIELD

The present invention relates to the field of range hood technologies, and more particularly, to an oil fume sensor and a range hood.

### BACKGROUND

In the related art, oil fume sensors are usually disposed in a range hood and sense an oil fume concentration, so that the range hood control power of a fan at any time, thereby realizing intellectualization. Due to different requirements of actual cooking scenarios abroad, the fan of the export range hood typically has a small air volume, which makes it difficult to provide enough suction power to draw oil fumes into the oil fume sensor. Therefore, the oil fume sensor faces difficulties in capturing and sensing the oil fumes, thereby making power of the range hood less likely to be intelligently adjusted based on the oil fume concentration.

### SUMMARY

Embodiments of the present invention provide an oil fume sensor and a range hood.

An oil fume sensor of the embodiments of the present invention includes: a body including a housing and a detection circuit disposed in the housing, the housing defining an oil fume inlet tube; and at least two oil fume guide tubes connected to the body, the oil fume inlet tube being in communication with the external environment through the at least two oil fume guide tubes.

In the oil fume sensor provided by the embodiment of the present invention, at least two oil fume inlet passages are formed through disposing at least two oil fume guide tubes, thereby increasing an oil fume intake volume. Therefore, after the oil fume sensor is applied in the range hood, oil fumes can be more easily captured by the oil fume sensor, in such a manner that the range hood can intelligently adjust power of the range hood based on an oil fume concentration.

Optionally, at least two oil fume guide tubes are two oil fume guide tubes. The two oil fume guide tubes and the oil fume inlet tube are arranged in a star pattern. An angle between the two oil fume guide tubes is substantially the same as an angle between each of the two oil fume guide tubes and the oil fume inlet tube.

In this way, the oil fume guide tubes and the oil fume inlet tube are arranged in the star pattern, which is conducive to improving flexibility of the arrangement of the oil fume guide tubes, disperses positions where the oil fumes enter, and facilitates maintenance of the oil fume guide tubes and the oil fume inlet tube.

Optionally, a ratio of a longitudinal dimension of the oil fume guide tube to a cross-sectional dimension of the oil fume inlet tube is greater than or equal to four.

In this way, by disposing a longer oil fume guide tube, the body can be in communication with the ambient environment at a longer distance, allowing suitable oil fumes to enter the oil fume guide tube more easily.

Optionally, each of the at least two oil fume guide tubes includes an oil fume outlet end connected to the oil fume inlet tube and an oil fume inlet end away from the oil fume inlet tube, the oil fume guide tube having a cross-sectional dimension that gradually increases from the oil fume outlet end to the oil fume inlet end.

In this way, a dimension of the oil fume inlet end can be much larger than a dimension of the oil fume outlet end, in such a manner that an oil fume inlet is enlarged in disguise, which is conducive to allowing more oil fumes to enter the oil fume inlet end.

Optionally, a ratio of a cross-sectional dimension of the oil fume inlet end to a cross-sectional dimension of the oil fume inlet tube is greater than or equal to two.

In this way, the dimension of the oil fume inlet end is two times larger than the dimension of the oil fume outlet end, which is conducive to allowing more oil fumes to enter the oil fume inlet end.

The range hood of another embodiment of the present invention is provided, including the oil fume sensor of any of the above embodiments.

Optionally, the range hood includes a range hood housing. The oil fume sensor is disposed in the range hood housing. The at least two oil fume guide tubes penetrate the range hood housing to enable the oil fume inlet tube to be in communication with an outside of the range hood housing through the at least two oil fume guide tubes.

In this way, the at least two oil fume guide tubes penetrate the range hood housing, the oil fume inlet tube is in communication with the outside of the range hood housing through the at least two oil fume guide tubes, which enables a small amount of oil fumes generated during cooking to directly enter an interior of the oil fume sensor from the oil fume inlet without overcoming other obstacles.

Optionally, the range hood housing includes a main housing and a deflector obliquely disposed at a lower part of the main housing. The at least two oil fume guide tubes penetrate the deflector to enable the oil fume inlet tube to be in communication with the outside of the range hood housing through the at least two oil fume guide tubes.

In this way, the deflector is configured to guide the oil fumes, so that the at least two oil fume guide tubes are in communication with the outside of the range hood housing by penetrating the deflector, which is more conducive to enable the oil fumes to enter into the oil fume inlet.

Optionally, the oil fume sensor further includes an elbow connected to a corresponding oil fume guide tube of the at least two oil fume guide tubes and in communication with the oil fume inlet end. The elbow penetrates the range hood housing to enable the oil fume inlet tube to be in communication with the outside of the range hood housing through the at least two oil fume guide tubes. The elbow includes a baffle disposed at an upper part of an end of the elbow away from the corresponding oil fume guide tube of the at least two oil fume guide tubes.

In this way, the baffle is disposed at an upper part of an end of the oil fume guide tube. The oil fumes are blocked by the baffle when flowing along the deflector from bottom to top, which enables the oil fumes to enter the elbow more easily.

Optionally, the elbow includes a snap disposed at an edge of the elbow adjacent to the corresponding oil fume guide tube. An edge of the corresponding oil fume guide tube connected to the elbow has a snap groove engaged with the snap. The elbow is removably connected to the corresponding oil fume guide tube through the snap and the snap groove.

In this way, removably connecting the elbow to the oil fume guide tube is conducive to replacement and maintenance of the elbow.

Optionally, the range hood includes a support fixed to an inner wall of the range hood housing. The support has a first plug hole. The body includes a first plug pin. The oil fume sensor is pre-fixed at the support through an engagement between the first plug pin and the first plug hole.

In this way, the support and the oil fume sensor are pre-fixed by the first plug pin and the first plug hole that are engaged with each other, effectively reducing a mounting difficulty.

Optionally, the body has a first fixing hole at a side of the body away from the first plug pin. The support has a second fixing hole matched with the first fixing hole.

In this way, the support can be connected and fixed to the oil fume sensor by passing a fastener through the first fixing hole and the second fixing hole.

Optionally, the range hood further includes a fan having an air inlet. The body further includes an oil fume outlet tube in communication with the oil fume inlet tube, the oil fume outlet tube being arranged adjacent to the air inlet.

In this way, an air flow rate near the fan is fast and an air pressure near the fan is small, which is more conducive to the entrance of the oil fumes from the oil fume inlet.

### BRIEF DESCRIPTION OF THE DRAWINGS

The above and/or additional aspects and advantages of the present invention will become more apparent and more understandable from the following description of embodiments taken in conjunction with the accompanying drawings.
FIG. 1 is a schematic structural view of a range hood according to an embodiment of the present invention.
FIG. 2 is a schematic structural view of an oil fume sensor of a range hood according to an embodiment of the present invention.
FIG. 3 is a front view of a range hood according to an embodiment of the present invention.
FIG. 4 is a side view of a range hood according to an embodiment of the present invention.

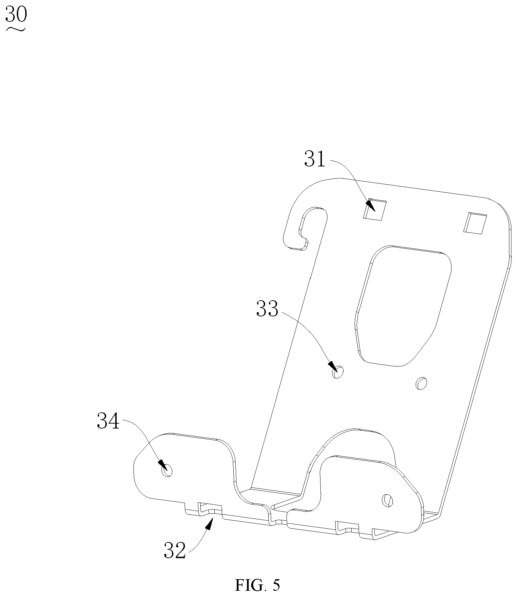

FIG. 5 is a schematic structural view of a support of a range hood according to an embodiment of the present invention.

Description of reference numerals of main components: range hood 100, oil fume sensor 10, body 11, housing 111, oil fume inlet tube 112, oil fume outlet tube 113, oil fume guide tube 12, oil fume outlet end 121, oil fume inlet end 122, snap groove 123, elbow 13, baffle 131, snap 132, first fixing hole 14, first plug pin 15, range hood housing 20, main housing 21, deflector 22, oil fume inlet 221, mounting hole 222, second plug pin 23, third fixing hole 24, condensation plate 25, support 30, first plug hole 31, second plug hole 32, second fixing hole 33, fourth fixing hole 34, fan 40, air inlet 41.

### DETAILED DESCRIPTION OF THE EMBODIMENTS

Embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limit, the present invention. In the description of the present invention, it should be understood that the orientation or the position indicated by terms such as "center", "longitudinal", "lateral", "length", "width", "thickness", "over", "below", "front", "rear", "left", "right", "vertical", "horizontal", "top", "bottom", "inner", "outer", "clockwise", and "anti-clockwise" should be construed to refer to the orientation or the position as shown in the drawings, and is only for the convenience of describing the present invention and simplifying the description, rather than indicating or implying that the pointed device or element must have a specific orientation, or be constructed and operated in a specific orientation, and therefore cannot be understood as a limitation of the present invention. In the description of the present invention, "plurality" means at least two, unless otherwise specifically defined.

In the description of the present invention, it should be noted that, unless otherwise clearly specified and limited, terms such as "install", "connect", and "connect to" should be understood in a broad sense. For example, it may be a fixed connection or a detachable connection or connection as one piece; mechanical connection or electrical connection; direct connection or indirect connection through an intermediate; internal communication of two components or the interaction relationship between two components. For those of ordinary skill in the art, the specific meaning of the above-mentioned terms in the present invention can be understood according to specific circumstances.

In the present invention, unless expressly stipulated and defined otherwise, the first feature "on" or "under" the second feature may mean that the first feature is in direct contact with the second feature, or the first and second features are in indirect contact through another feature between them. Moreover, the first feature "above" the second feature means that the first feature is directly above or obliquely above the second feature, or simply means that the level of the first feature is higher than that of the second feature. The first feature "below" the second feature means that the first feature is directly below or obliquely below the second feature, or simply means that the level of the first feature is smaller than that of the second feature.

Different embodiments or examples are provided in the disclosure of the present invention to implement different structures of the present invention. To simplify the disclosure of the present invention, components and arrangements of particular examples will be described below, which are, of course, examples only and are not intended to limit the present invention. Further, reference numerals and/or reference letters may be repeated in different examples of the present invention. Such repetition is for the purpose of simplicity and clarity and does not indicate any relationship between various embodiments and/or arrangements in question. In addition, various examples of specific processes and materials are provided in the present invention. However, those of ordinary skill in the art may be aware of applications of other processes and/or the use of other materials.

In the related art, oil fume sensors are usually disposed in a range hood and sense an oil fume concentration, so that the range hood control power of a fan at any time, thereby realizing intellectualization. Due to different requirements of actual cooking scenarios abroad, the fan of the export range hood typically has a small air volume, which makes it difficult to provide enough suction power to draw oil fumes into the oil fume sensor. Therefore, the oil fume sensor faces difficulties in capturing and sensing the oil fumes, thereby making power of the range hood less likely to be intelligently adjusted based on the oil fume concentration.

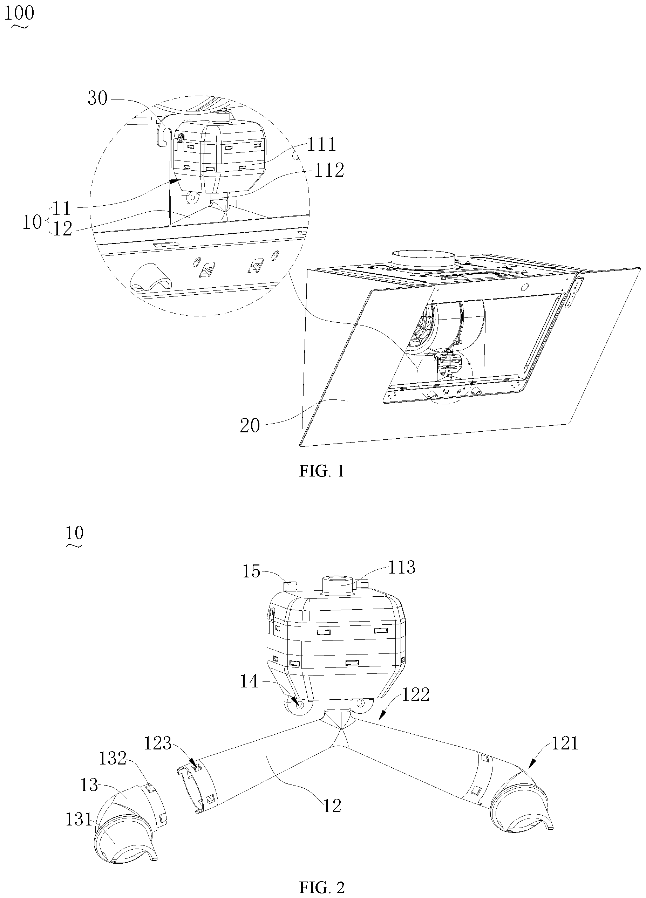

As illustrated in FIG. 1, the embodiments of the present invention provide a range hood 100 including an oil fume sensor 10. The oil fume sensor 10 includes a body 11 and at least two oil fume guide tubes 12. The body includes a housing 111 and a detection circuit disposed in the housing 111. The housing 111 defines an oil fume inlet tube 112. Two oil fume guide tubes 12 are connected to the body 11, so that the oil fume inlet tube 112 is in communication with an ambient environment through the two oil fume guide tubes 12.

In the oil fume sensor 10 provided by the embodiment of the present invention, at least two oil fume inlet passages are formed through disposing at least two oil fume guide tubes 12, thereby increasing an oil fume intake volume. Therefore, after the oil fume sensor 10 is applied in the range hood 100, oil fumes can be more easily captured by the oil fume sensor 10, in such a manner that the range hood 100 can intelligently adjust power of the range hood 100 based on an oil fume concentration.

Specifically, the range hood 100, also known as an oil fume extractor, is a kitchen appliance that purifies a kitchen environment. The range hood is mounted above a kitchen stove, which can quickly draw away waste generated by combustion of the kitchen stove and the oil fumes harmful to the human body produced during cooking and exhaust the waste and the smoke outdoors. In addition, the range hood can condense and collect the oil fumes, which reduces pollution, purifies air, and provides safety guarantees against poisoning and explosions. Range hoods 100 can be categorized into top-mounted range hoods 100 and side-suction range hoods 100. In this embodiment, the range hood 100 is the side-suction range hood 100.

The oil fume sensors 10 are sensors capable of sensing an existence of smoke and the smoke concentration in an environment, and can be classified into various types, including a gas-sensitive oil fume sensor 10, an ionic oil fume sensor 10, and a photoelectric oil fume sensor 10. Operation principles of the photoelectric oil fume sensor 10 are mainly based on principles of light scattering and light absorption. A core component of the photoelectric oil fume sensor is a light scatterer composed of a light emitting diode and a photoresistor. When no smoke presents, light emitted by the light emitting diode directly irradiates the photoresistor. A resistance value of the photoresistor is kept in a stable range. However, when smoke particles present in the air, these particles scatter and absorb light, and thus part of the light is received by the photoresistor, causing the resistance value of the photoresistor to change. By measuring a change of the resistance value of the photoresistor, the smoke concentration in the air can be determined. In this embodiment, the oil fume sensor 10 is the photoelectric oil fume sensor 10.

The oil fume guide tube 12 has a circular cross section. The two oil fume guide tubes 12 diverge and extend towards two different regions, respectively.

As illustrated in FIG. 2, in some embodiments, at least two oil fume guide tubes 12 are two oil fume guide tubes 12. The two oil fume guide tubes 12 and the oil fume inlet tube 112 are arranged in a star pattern. An angle between the two oil fume guide tubes 12 is substantially the same as an angle between each of the two oil fume guide tubes 12 and the oil fume inlet tube 112.

In this way, the oil fume guide tubes 12 and the oil fume inlet tube 112 are arranged in the star pattern, which is conducive to improving flexibility of the arrangement of the oil fume guide tubes 12, disperses positions where the oil fumes enter, and facilitates maintenance of the oil fume guide tubes 12 and the oil fume inlet tube 112.

Specifically, the oil fume sensor 10 further includes a tee. The tee, also known as a tube tee, a tee fitting, a tee joint, etc., is a tube fitting or a tube connector mainly used for changing a direction of a fluid and is used at a part of a main tube to be branched. The tee has three openings, i.e., one inlet and two outlets; or two inlets and one outlet. Tees are in T shapes or Y shapes, or have equal-diameter openings or different-diameter openings, and are used at the confluence of three identical or different tube lines.

In this embodiment, the tee is in the Y-shape. An angle between two adjacent branches is 60°. The tee has one end in communication with the oil fume inlet tube 112 and two ends in communication with the two oil fume guide tubes 12, respectively.

In some embodiments, a ratio of a longitudinal dimension of the oil fume guide tube 12 to a cross-sectional dimension of the oil fume inlet tube 112 is greater than or equal to four.

In this way, by disposing a longer oil fume guide tube 12, the body 11 can be in communication with the ambient environment at a longer distance, allowing suitable oil fumes to enter the oil fume guide tube 12 more easily.

Specifically, the oil fume guide tube 12 has a length approximately four times a diameter of the oil fume inlet tube 112, in such a manner that the two oil fume guide tubes 12 can extend outwards to distant positions.

In some embodiments, each of the at least two oil fume guide tubes 12 includes an oil fume outlet end 121 connected to the oil fume inlet tube 112 and an oil fume inlet end 122 away from the oil fume inlet tube 112. The oil fume guide tube 12 has a cross-sectional dimension that gradually increases from the oil fume outlet end 121 to the oil fume inlet end 122.

In this way, a dimension of the oil fume inlet end 122 can be much larger than a dimension of the oil fume outlet end 121, in such a manner that an oil fume inlet 221 is enlarged in disguise, which is conducive to allowing more oil fumes to enter the oil fume inlet end 122.

Specifically, the oil fume guide tube 12 is in a shape of a truncated cone. The oil fume guide tube 12 has a cross section in a shape of a circular ring. A diameter of the cross section of the oil fume guide tube 12 gradually increases from the oil fume outlet end 121 to the oil fume inlet end 122.

In some embodiments, a ratio of a cross-sectional dimension of the oil fume inlet end 122 to a cross-sectional dimension of the oil fume inlet tube 112 is greater than or equal to two.

In this way, the dimension of the oil fume inlet end 122 is two times larger than the dimension of the oil fume outlet end 121, which is conducive to allowing more oil fumes to enter the oil fume inlet end 122.

Specifically, cross sections of both the oil fume inlet end 122 and the oil fume inlet tube 112 are in shapes of circular rings. In this embodiment, a ratio of a diameter of an inner cross-sectional circle of the oil fume inlet end 122 to a diameter of an inner cross-sectional circle of the oil fume inlet tube 112 is 8:3. In other embodiments, the ratio of the diameter of the inner cross-sectional circle of the oil fume inlet end 122 to the diameter of the inner cross-sectional circle of the oil fume inlet tube 112 may also be set to other values as desired.

As illustrated in FIG. 1, in some embodiments, the range hood 100 includes a range hood housing 20. The oil fume sensor 10 is disposed in the range hood housing 20. The oil fume guide tubes 12 penetrate the range hood housing 20. The oil fume inlet tube 112 is in communication with an outside of the range hood housing 20 through the oil fume guide tubes 12.

In this way, the oil fume guide tubes 12 penetrate the range hood housing 20, so that the oil fume inlet tube 112 is in communication with the outside of the range hood housing 20 through the oil fume guide tubes 12, which enables a small amount of oil fumes generated during cooking to directly enter the interior of the oil fume sensor 10 from the oil fume inlet 221 without overcoming other obstacles.

Specifically, the range hood housing 20 has an oil fume collection cavity in a middle of the range hood housing 20. The oil fume sensor 10 is disposed in the oil fume collection cavity. The range hood housing 20 further has the oil fume inlet 221 and a mounting hole 222. The oil fume inlet 221 is in communication with the oil fume collection cavity and is provided with a filter screen. Two mounting holes 222 are formed and spaced apart from each other. The oil fume guide tubes 12 passes through the mounting hole 222, in such a manner that the oil fume inlet tube 112 is in communication with the outside of the range hood housing 20 through the oil fume guide tubes 12. The two oil fume guide tubes 12 are arranged in a one-to-one correspondence with the two mounting holes 222.

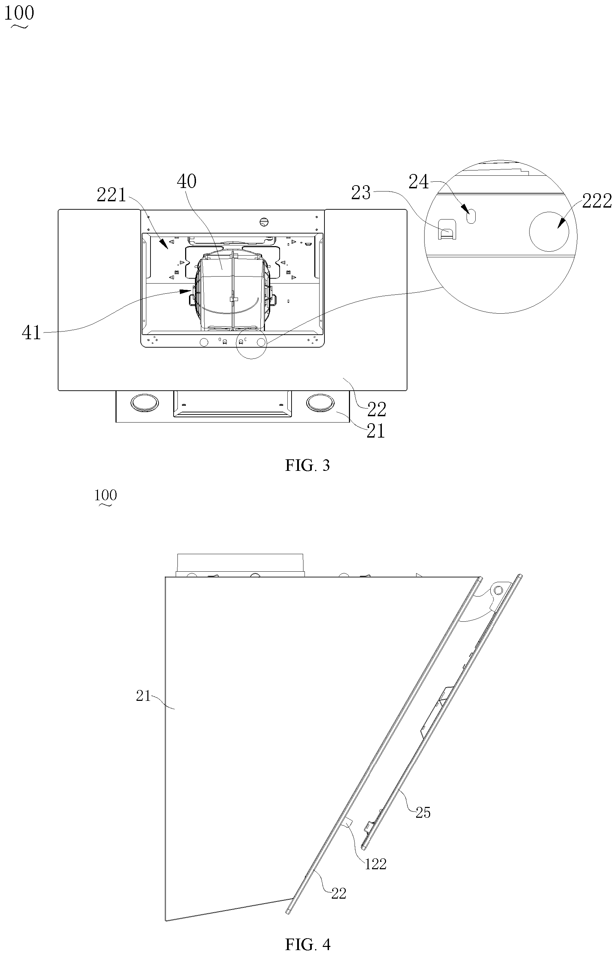

As illustrated in FIG. 1 and FIG. 3, in some embodiments, the range hood housing 20 includes a main housing 21 and a deflector 22 obliquely disposed at a lower part of the main housing 21. The oil fume guide tubes 12 penetrate the deflector 22. The oil fume inlet tube 112 is in communication with the outside of the range hood housing 20 through the oil fume guide tubes 12.

In this way, the deflector 22 is configured to guide the oil fumes, so that the oil fume guide tube 12 is in communication with the outside of the range hood housing 20 by penetrating the deflector 22, which is more conducive to the oil fumes to enter to the oil fume inlet 221.

Specifically, as a key component integrating guidance, filtration, decoration, and cleaning, the deflector 22 plays an important role in improving performance and usage experience of the range hood 100. The deflector 22 has the oil fume inlet 221 and the mounting hole 222 that is used for the oil fume guide tube 12 to pass through. One of the main functions of the deflector 22 is to greatly reduce a speed of the high-speed rising oil fumes after hitting the deflector 22. Consequently, the smoke accumulates at a bottom of the deflector 22 and then flows upwards along the bottom of the deflector 22, further slowing down the speed of the oil fumes. Further, oil fumes and the smoke are guided to the oil fume inlet 221 of the range hood 100, which makes it easier for the smoke and the oil fume to be sucked in by the range hood 100.

In this embodiment, the oil fume inlet 221 is arranged at a middle of the deflector 22, and the deflector 22 is obliquely disposed at the lower part of the main housing 21, in such a manner that the rising oil fumes can flow into the oil fume inlet 221 along the deflector 22. Two mounting holes 222 are arranged at the deflector 22. The oil fume guide tube 12 penetrates the deflector 22 through the mounting hole 222, in such a manner that the oil fume inlet tube 112 is in communication with the outside of the range hood housing 20 through the oil fume guide tube 12.

Further, the two mounting holes 222 are both arranged adjacent to the oil fume inlet 221 and at a lower part of the oil fume inlet 221. The oil fume at the lower part of the oil fume inlet 221 has a great flow rate and thus enters the oil fume guide tube 12 easily.

As illustrated in FIG. 4, further, the range hood housing 20 further includes a condensation plate 25 mounted at the main housing 21 through a mounting frame. The condensation plate 25 is disposed at an outer side of the oil fume inlet 221, and has a dimension larger a dimension of the oil fume inlet 221 and equal to or smaller than a dimension of the deflector 22. The condensation plate 25 and the deflector 22 are spaced apart from each other. A plane where the condensation plate 25 is located is parallel to a plane where the deflector 22 is located.

Further, the oil fume guide tube 12 passes through the mounting hole 222. Also, the oil fume inlet end 122 is positioned between the condensation plate 25 and the deflector 22.

As illustrated in FIG. 2 and FIG. 3, in some embodiments, the oil fume sensor 10 further includes an elbow 13 connected to the oil fume guide tube 12 and in communication with the oil fume inlet end 122. The elbow 13 penetrates the range hood housing 20. The oil fume inlet tube 112 is in communication with the outside of the range hood housing 20 through the oil fume guide tube 12. The elbow 13 includes a baffle 131 disposed at an upper part of an end of the elbow 13 away from the oil fume guide tube 12.

In this way, the baffle 131 is disposed at an upper part of an end of the oil fume guide tube 12. The oil fumes are blocked by the baffle 131 when flowing along the deflector 22 from bottom to top, which enables the oil fumes to enter the elbow 13 more easily.

Specifically, the elbow 13 is a connection tube fitting commonly used in tube mounting, and is used for a connection at a bend of a tube. The elbow 13 is used for connecting two tubes having a same or different nominal diameters, in such a manner that the tubes turn at 45°, 90°, 180°, or other angles. In this embodiment, an elbow tube extends out of the mounting hole 222 to form the oil fume inlet end 122. A part of the elbow tube extending out of the mounting hole 222 has a diameter slightly smaller than a diameter of the mounting hole 222. It should be noted that the diameter of the mounting hole 222 should be prevented from being much larger than the diameter of the part of the elbow tube extending out of the mounting hole 222 to avoid an excessive gap, considering that the elbow 13 can move in the mounting hole 222 when the excessive gap exists and thus causes damages to the mounting hole 222 or the elbow 13.

The elbow tube is a 90° elbow tube. The elbow 13 is a round-tube elbow 13. The baffle 131 is in an arc shape and is arranged at an edge of the elbow 13 at a side adjacent to the oil fume inlet 221. Further, the baffle 131 and the elbow 13 are integrally formed through integral processing and molding. In other embodiments, the baffle 131 and the elbow 13 may also be separately processed and molded, and then connected by a fastener.

Further, an outer wall of the elbow 13 is provided with a limit portion. When the elbow 13 extends out of the mounting hole 222, the limit portion abuts against an inner side of a guide plate to prevent the elbow 13 from extending out for too long a distance. In the embodiments of the present invention, the limit portion is a limit ring arranged around the outer wall of the elbow 13 and has a diameter slightly larger than the diameter of the mounting hole 222.

As illustrated in FIG. 2, in some embodiments, the elbow 13 includes a snap 132 disposed at an edge of the elbow 13 adjacent to the oil fume guide tube 12. An edge of the oil fume guide tube 12 connected to the elbow 13 has a snap groove 123 engaged with the snap 132. The elbow 13 is removably connected to the oil fume guide tube 12 through the snap 132 and the snap groove 123.

In this way, removably connecting the elbow 13 to the oil fume guide tube 12 is conducive to replacement and maintenance of the elbow 13.

Specifically, the elbow 13 and the oil fume guide tube 12 are inserted into and connected to each other. The elbow 13 is partially inserted into the oil fume guide tube 12. An outer surface of the elbow 13 is provided with the snap 132. The snap 132 is inserted into the oil fume guide tube 12 along with the elbow 13. A side wall of the oil fume guide tube 12 has the snap groove 123. The snap 132 is snapped into the snap groove 123 to realize a connection between the elbow 13 and the oil fume guide tube 12.

Further, a plurality of snaps 132 are provided and are evenly arranged around the elbow 13 in a circumferential direction of the elbow 13. A quantity of the snap grooves 123 is the same as a quantity of the snaps 132. The snap grooves 123 are evenly arranged around a side wall of the oil fume guide tube 12 in a circumferential direction of the side wall of the oil fume guide tube 12. One snap groove 123 corresponds to and is engaged with one snap 132. The snap grooves 123 and the snaps 132 are arranged in a one-to-one correspondence. In this embodiment, four snaps 132 are provided and are evenly arranged around the elbow 13 in the circumferential direction of the elbow 13. Since the quantity of the snap grooves 123 is the same as the quantity of the snaps 132, four snap grooves 123 are evenly arranged around the side wall of the oil fume guide tube 12 in the circumferential direction of the side wall of the oil fume guide tube 12. The four snap grooves 123 correspond to and are engaged with the four snaps 132, respectively. The snap grooves 123 and the snaps 132 are arranged in the one-to-one correspondence.

As illustrated in FIG. 2 to FIG. 4, in some embodiments, the range hood 100 includes a support 30 fixed to an inner wall of the range hood housing 20. The support 30 has a first plug hole 31. The body 11 includes a first plug pin 15. The oil fume sensor 10 is pre-fixed at the support 30 through an engagement between the first plug pin 15 and the first plug hole 31.

In this way, the support 30 and the oil fume sensor 10 are pre-fixed by the first plug pin 15 and the first plug hole 31 that are engaged with each other, effectively reducing a mounting difficulty.

Specifically, the first plug pin 15 is disposed at a side of the oil fume sensor 10. The support 30 has the first plug hole 31 engaged with the first plug pin 15. The range hood housing 20 is provided with a second plug pin 23 for pre-fixing the support 30 at the range hood housing 20. Another end of the support 30 has a second plug hole 32 for an engagement with the second plug pin 23.

Further, the support 30 has an integrated structure formed by integral processing and molding. A plurality of first plug pins 15 are provided and arranged at intervals at a side of the oil fume sensor 10. A quantity of first plug holes 31 is the same as a quantity of first plug pins 15. The plurality of first plug holes 31 and the plurality of first plug pins 15 are arranged in a one-to-one correspondence. Similarly, a plurality of second plug pins 23 are provided and arranged at intervals at a side of the oil fume sensor 10. A quantity of of second plug holes 32 is the same as a quantity of second plug pins 23. The plurality of second plug holes 32 and the plurality of second plug pins 23 are arranged in a one-to-one correspondence.

In this embodiment, two first plug pins 15 are provided, are arranged at the side of the oil fume sensor 10, and are spaced apart from each other. Two first plug holes 31 are provided and arranged in a one-to-one correspondence with the two first plug pins 15. Similarly, two second plug pins 23 are provided, arranged at the side of the oil fume sensor 10, and are spaced apart from each other. Two second plug holes 32 are provided and arranged in a one-to-one correspondence with the two second plug pins 23.

In other embodiments, the plurality of first plug pins 15 may also be arranged corresponding to one first plug hole 31. In this case, the first plug hole 31 is a long hole. The plurality of first plug pins 15 may be inserted into the first plug hole 31 simultaneously. Similarly, the plurality of second plug pins 23 may also be arranged corresponding to one second plug hole 32. In this case, the second plug hole 32 is a long hole. The plurality of second plug pins 23 may be inserted into the second plug hole 32 simultaneously.

In some embodiments, the body 11 has a first fixing hole 14 at a side of the body 11 away from the first plug pin 15. The support 30 has a second fixing hole 33 matched with the first fixing hole 14.

In this way, the support 30 can be connected and fixed to the oil fume sensor 10 by passing a fastener through the first fixing hole 14 and the second fixing hole 33.

Specifically, the first fixing hole 14 is formed at another side of the oil fume sensor 10 away from the first plug pin 15. A part of the support 30 corresponding to the first fixing hole 14 has the second fixing hole 33.

Further, after being pre-fixed through the engagement between the first plug pin 15 and the first plug hole 31, the oil fume sensor 10 is further fixed by the fastener passing through the first fixing hole 14 and the second fixing hole 33.

Further, a plurality of first fixing holes 14 are provided. Correspondingly, a quantity of the second fixing holes 33 is the same as a quantity of the first fixing holes 14.

Alternatively, the fastener may be a bolt, a screw, a rivet, etc.

In this embodiment, two first fixing holes 14 and two second fixing holes 33 are provided and are arranged in a one-to-one correspondence. The fastener is a set featuring a bolt and a nut that are used together. The bolt passes through the first fixing hole 14 and the second fixing hole 33 and is fastened at another end by the nut, realizing a detachable connection between the oil fume sensor 10 and the support 30.

Similarly, the range hood housing 20 further has a third fixing hole 24 arranged around the second plug pin 23. A part of the support 30 corresponding to the third fixing hole 24 has a fourth fixing hole 34.

Further, after being pre-fixed through the engagement between the second plug pin 23 and the second plug hole 32, the oil fume sensor 10 is further fixed by a fastener passing through the third fixing hole 24 and the fourth fixing hole 34.

Further, a plurality of third fixing holes 24 are provided. Correspondingly, a quantity of the fourth fixing holes 34 is the same as a quantity of the third fixing holes 24.

Alternatively, the fastener may be a bolt, a screw, a rivet, etc.

In this embodiment, two third fixing holes 24 and two fourth fixing holes 34 are provided. The two third fixing holes 24 are arranged at two sides of the second plug pin 23, respectively. The two third fixing holes 24 and the two fourth fixing holes 34 are arranged in a one-to-one correspondence. The fastener is a set featuring a bolt and a nut that are used together. The bolt passes through the third fixing hole 24 and the fourth fixing hole 34 and is fastened at another end by the nut, realizing a detachable connection between the range hood housing 20 and the support 30.

As illustrated in FIG. 3, in some embodiments, the range hood 100 includes a fan 40 having an air inlet 41. The body 11 further includes an oil fume outlet tube 113 in communication with the oil fume inlet tube 112. The oil fume outlet tube 113 is arranged adjacent to the air inlet 41.

In this way, an air flow rate near the fan 40 is fast and an air pressure near the fan 40 is small, which is more conducive to the entrance of the oil fumes from the oil fume inlet 221.

Specifically, the fan 40 is a key component in the range hood 100 for extracting and exhausting the oil fumes and purifying air. Through a powerful suction power, the fan 40 quickly sucks in the oil fumes generated above the stove and guides the smoke towards a smoke passage to prevent the oil fumes from spreading indoors, and guides the oil fumes towards an oil fume purification device. The smoke is filtered and purified before being discharged outdoors, keeping the kitchen air fresh.

In this embodiment, the range hood housing 20 has an exhaust opening. The fan 40 has an air outlet connected to and in communication with the exhaust opening. The air inlets 41 are arranged at two sides of the fan 40. The oil fume outlet tube 113 is arranged below the fan 40 and located between two air inlets 41. A pressure at a position below the fan 40 and located between the two air inlets 41 is minimally affected by flowing of air at the two air inlets 41. Therefore, the arrangement of the oil fume outlet tube 113 facilitates suction of the oil fumes into the oil fume sensor 10.

Further, a detection circuit of the oil fume sensor 10 is electrically connected to the fan 40. In this way, the fan 40 can be controlled using the oil fume sensor 10, in such a manner that an automatic response can be made by the range hood 100 and oil fume extraction performance can be enhanced, making the range hood 100 more convenient and intelligent, energy-saving, and environmentally friendly. Therefore, a quality of life and safety and reliability of the range hood 100 can be improved.

Reference throughout this specification to "certain embodiments", "an embodiment", "some embodiments", "illustrative embodiments", "examples", "specific examples", or "some examples" means that a particular feature, structure, material, or characteristic described in connection with the embodiment or example is included in at least one embodiment or example of the present invention. The appearances of the above phrases in various places throughout this specification are not necessarily referring to the same embodiment or example. Further, the particular features, structures, materials, or characteristics may be combined in any suitable manner in one or more embodiments or examples.

In addition, the terms "first" and "second" are only used for descriptive purposes, and cannot be understood as indicating or implying relative importance or implicitly indicating the number of indicated technical features. Therefore, the features associated with "first" and "second" may explicitly or implicitly include at least one of the features. In the description of the present invention, "plurality" means at least two, unless otherwise specifically defined.

## Claims

1. An oil fume sensor (10), comprising:
a body (11) comprising a housing (111) and a detection circuit disposed in the housing (111), the housing (11) defining an oil fume inlet tube (112); and
at least two oil fume guide tubes (12) connected to the body (11), the oil fume inlet tube (112) being in communication with the external environment through the at least two oil fume guide tubes (12).

2. The oil fume sensor (10) according to claim 1, wherein at least two oil fume guide tubes (12) are two oil fume guide tubes (12), the two oil fume guide tubes (12) and the oil fume inlet tube (112) being arranged in a star pattern, and an angle between the two oil fume guide tubes (12) being substantially the same as an angle between each of the two oil fume guide tubes (12) and the oil fume inlet tube (112).

3. The oil fume sensor (10) according to claim 2, wherein a ratio of a longitudinal dimension of the oil fume guide tube (12) to a cross-sectional dimension of the oil fume inlet tube (112) is greater than or equal to four.

4. The oil fume sensor (10) according to any one of claims 1-3, wherein each of the at least two oil fume guide tubes (12) comprises an oil fume outlet end (121) connected to the oil fume inlet tube (112) and an oil fume inlet end (122) away from the oil fume inlet tube (112), the oil fume guide tube (12) having a cross-sectional dimension that gradually increases from the oil fume outlet end (121) to the oil fume inlet end (122).

5. The oil fume sensor (10) according to claim 4, wherein a ratio of a cross-sectional dimension of the oil fume inlet end (122) to the cross-sectional dimension of the oil fume inlet tube (112) is greater than or equal to two.

6. A range hood (100), comprising the oil fume sensor (10) according to any one of claims 1 to 5.

7. The range hood (100) according to claim 6, further comprising:
a range hood housing (20), the oil fume sensor (10) being disposed in the range hood housing (20), the at least two oil fume guide tubes (12) penetrating the range hood housing (20) to enable the oil fume inlet tube (112) to be in communication with an outside of the range hood housing (20) through the at least two oil fume guide tubes (12).

8. The range hood (100) according to claim 7, wherein the range hood housing (20) comprises a main housing (21) and a deflector (22) obliquely disposed at a lower part of the main housing (21), the at least two oil fume guide tubes (12) penetrating the deflector (22) to enable the oil fume inlet tube (112) to be in communication with the outside of the range hood housing (20) through the at least two oil fume guide tubes (12).

9. The range hood (100) according to claim 7 or 8, wherein the oil fume sensor further comprises an elbow (13) connected to a corresponding oil fume guide tube (12) of the at least two oil fume guide tubes (12) and in communication with the oil fume inlet end (122), wherein:
the elbow (13) penetrates the range hood housing (20) to enable the oil fume inlet tube (112) to be in communication with the outside of the range hood housing (20) through the at least two oil fume guide tubes (12); and
the elbow (13) comprises a baffle (131) disposed at an upper part of an end of the elbow (13) away from the corresponding oil fume guide tube (12) of the at least two oil fume guide tubes.

10. The range hood (100) according to claim 9, wherein the elbow (13) comprises a snap (132) disposed at an edge of the elbow (13) adjacent to the corresponding oil fume guide tube (12), an edge of the corresponding oil fume guide tube (12) connected to the elbow having a snap groove (123) engaged with the snap (132), and the elbow (13) being removably connected to the corresponding oil fume guide tube (12) through the snap (132) and the snap groove (123).

11. The range hood (100) according to any one of claims 7-10, further comprising: a support (30) fixed to an inner wall of the range hood housing (20), wherein:
the support (30) has a first plug hole (31); and
the body (11) comprises a first plug pin (15), the oil fume sensor (10) being pre-fixed at the support (30) through an engagement between the first plug pin (15) and the plug hole (31).

12. The range hood (100) according to claim 11, wherein:
the body (11) has a first fixing hole at a side of the body (11) away from the first plug pin (15); and
the support (30) has a second fixing hole matched with the first fixing hole (31).

13. The range hood (100) according to any one of claims 6-12, further comprising a fan (40), the fan (40) having an air inlet (41),
wherein the body (11) further comprises an oil fume outlet tube (113) in communication with the oil fume inlet tube (112), the oil fume outlet tube (113) being arranged adjacent to the air inlet (41).
